# EUROPÄISCHE PATENTSCHRIFT

(11) **EP 1 646 544 B1**
(45) Veröffentlichungstag und Bekanntmachung des Hinweises auf die Patenterteilung: **02.02.2011**
(21) Anmeldenummer: 04766165.7
(22) Anmeldetag: 08.07.2004
(51) Int. Cl.: B60T 8/88, B60T 17/22

(54) **VORRICHTUNG UND VERFAHREN ZUR BESTIMMUNG VON HYDRAULISCHEN FEHLERN IN ELEKTROHYDRAULISCHEN BREMSSYSTEMEN**
DEVICE AND METHOD FOR IDENTIFYING HYDRAULIC DEFECTS IN AN ELECTROHYDRAULIC BRAKE SYSTEM
DISPOSITIF ET PROCEDE POUR IDENTIFIER DES DEFAUTS HYDRAULIQUES DANS DES SYSTEMES DE FREINAGE ELECTROHYDRAULIQUES

(30) Priorität: 08.07.2003 DE 10330664
(43) Veröffentlichungstag der Anmeldung: 19.04.2006
(73) Patentinhaber: Continental Teves AG & Co. oHG, 60488 Frankfurt (DE)
(72) Erfinder: KLING, Wolfgang, 65779 Kelkheim (DE); KOHL, Andreas, 55126 Mainz (DE); PUFF, Rüdiger, 65510 Hünstetten-Wallbach (DE)
(86) Internationale Anmeldenummer: PCT/EP2004/051419
(87) Internationale Veröffentlichungsnummer: WO 2005/005215

(56) Entgegenhaltungen:
- DE-A- 10 033 909
- DE-A- 10 053 334
- DE-A- 10 244 762
- DE-A- 19 832 950
- US-A- 5 908 983
- US-A1- 2003 038 538

## Beschreibung

Die Erfindung betrifft ein Verfahren zur Bestimmung von hydraulischen Fehlern in elektrohydraulischen Bremssystemen gemäß dem Oberbegriff des Patentanspruchs 1.

Bei bisher bekannten elektrohydraulischen Bremssystemen wird beim Auftreten eines Fehlerbildes direkt ein Betriebsmodus gewählt, der alle möglichen Einzelfehler, die ein gemeinsames Fehlerbild verursachen, berücksichtigt. Es wird also ein Betriebsmodus gewählt, der beim Auftreten eines Fehlerbildes einen Großteil des Bremssystems abschaltet oder Regelfunktionen des Bremssystems außer Kraft setzt und dadurch dem Fahrzeugführer ein Bremssystem zur Verfügung stellt, das zum Teil wesentlich eingeschränkt ist.

Ein derartiges Verfahren ist der DE 100 53 334 A1 bekannt. Bei dem vorbekannten Verfahren werden die folgenden Verfahrensschritte durchgeführt:
- Erkennung eines Fehlerbildes durch Vergleich mehrerer, hydraulischer und elektrischer Sollwerte mit den durch Sensoren gemessenen Istwerten in der elektronischen Steuer- und Regeleinheit;
- Auswahl einer dem Fehlerbild entsprechenden Prüfroutine und deren Durchführung;
- Lokalisierung des das Fehlerbild verursachenden Einzelfehlers;
- Auswahl eines den verursachenden Einzelfehler berücksichtigenden Betriebsmodus und Betrieb des Bremssystems in diesem Betriebsmodus.

Die genannte Veröffentlichung vermittelt dem Fachmann jedoch keine Lehre darüber, wie verfahren werden soll, wenn die Lokalisierung des Fehlerbildes fehlschlägt.

Die Aufgabe der vorliegenden Erfindung ist es also, ein Verfahren zur Bestimmung von hydraulischen Fehlern dahin gehend zu verbessern, das selbst bei einer fehl geschlagenen Lokalisierung des Fehlerbildes geeignete Maßnahmen zum sicheren und zuverlässigen Betrieb des Bremssystems ergriffen werden können.

Diese Aufgabe wird erfindungsgemäß dadurch gelöst, dass nach einer fehlgeschlagenen Lokalisierung des verursachenden Einzelfehlers eine begrenzte Menge an Einzelfehlern von einem Betriebsmodus berücksichtigt wird, bis eine geeignete Prüfsituation zur Lokalisierung des verursachenden Einzelfehlers zur Verfügung steht.

Nach einem vorteilhaften Ausführungsbeispiel des erfindungsgemäßen Verfahrens werden den Fehlerbildern unterschiedliche Prioritäten zugeordnet, wobei ein koordinierter Abbruch der gerade durchgeführten Prüfroutine vorgesehen ist, wenn ein Fehlerbild mit einer höheren Priorität auftritt.

Zur Konkretisierung des Erfindungsgedankens ist vorgesehen, dass ein koordinierter Abbruch der gerade durchgeführten Prüfroutine bei einer Interaktion des Fahrzeugführers vorgesehen ist. Dabei wird der koordinierte Abbruch durchgeführt, indem das Bremssystem in denselben Zustand wie vor Beginn der abzubrechenden Prüfroutine versetzt wird.

Eine weitere vorteilhafte Weiterbildung des erfindungsgemäßen Verfahrens sieht vor, dass die Prüfroutine die einem Fehlerbild zugeordneten hydraulischen Komponenten hinsichtlich ihrer Funktionsfähigkeit überprüft oder Regelstrategien abändert, um den verursachenden Einzelfehler zu finden.

Außerdem ist vorgesehen, dass die Prüfroutinen unbemerkt vom Fahrzeugführer ablaufen und die bestmögliche Bremsleistung aufrecht erhalten oder alternativ dann durchgeführt wird, wenn sich das Kraftfahrzeug in einem Zustand befindet, in dem die Auswirkungen der durchgeführten Prüfroutinen keine gefährliche Fahrsituation herbeiführen.

Nach der erfolgreichen Lokalisierung des verursachenden Einzelfehlers werden weitere, neu erkannte Fehlerbilder bearbeitet.

Weitere vorteilhafte Merkmale des erfindungsgemäßen Verfahrens sind den Unteransprüchen 8 bis 13 entnehmbar.

Die Erfindung wird nachfolgend im Zusammenhang mit der beiliegenden Zeichnung näher erläutert. In der Zeichnung zeigen:
- Fig.1: ein schematisch dargestelltes Schaltbild eines e- lektrohydraulischen Bremssystems, bei dem das er- findungsgemäße Verfahren durchführbar ist und
- Fig. 2: ein vorbekanntes Verfahren gemäß dem Oberbegriff des Patentanspruchs 1 in einem schematisch darge- stellten Ablaufplan.

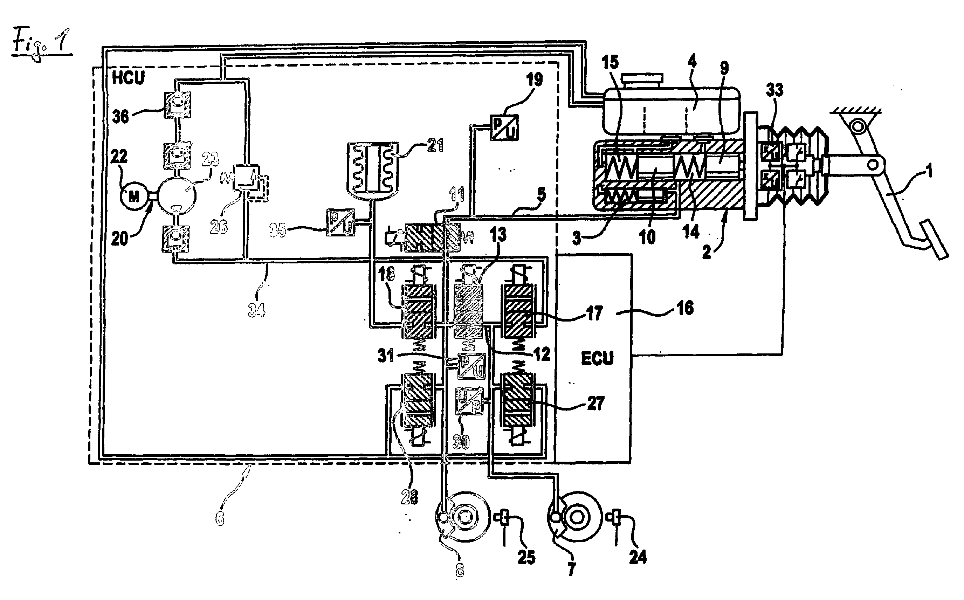

Das in Fig. 1 lediglich schematisch dargestellte Bremssystem besteht im wesentlichen aus einem mittels eines Bremspedals 1 betätigbaren, zweikreisigen hydraulischen Druckerzeuger bzw. Hauptbremszylinder 2 in Tandemausführung, einem mit dem Tandemhauptzylinder 2 zusammenwirkenden Wegsimulator 3, einem dem Tandemhauptzylinder 2 zugeordneten Druckmittelvorratsbehälter 4, einer hydraulischen Druckquelle, einer lediglich schematisch angedeuteten hydraulischen Steuereinheit HCU 6, die u.a. sämtliche, für Druckregelvorgänge erforderlichen Komponenten enthält und an die beispielsweise der Hinterachse des Kraftfahrzeugs zugeordnete Radbremsen 7, 8 angeschlossen sind, sowie einer elektronischen Steuer- und Regeleinheit ECU 16. Zur Ermittlung der Drehzahl der Fahrzeugräder dienen lediglich angedeutete Raddrehzahlsensoren 24, 25. Der an sich bekannte Tandemhauptzylinder 2 weist durch zwei Kolben 9, 10, begrenzte, voneinander getrennte Druckräume 14, 15 auf, die sowohl mit dem Druckmittelvorratsbehälter 4 als auch über die HCU 6 mit den Fahrzeugbremsen 7, 8, -, - verbindbar sind. Die vorhin erwähnte Druckquelle wird durch ein MotorPumpenaggregat 20, das aus einem Elektromotor 22 sowie eine vom Elektromotor 22 angetriebene Pumpe 23 besteht, ein der Pumpe parallel geschaltetes Druckbegrenzungsventil 26 sowie einen durch die Pumpe 23 aufladbaren Hochdruckspeicher 21, dessen Medientrennungselement ein metallischer Faltenbalg ist, gebildet. Der Hochdruckspeicher 21 weist außerdem einen nicht dargestellten Wegsensor zur Ermittlung der Position des metallischen Faltenbalgs auf, wodurch das im Hochdruckspeicher 21 gespeicherte Druckmittelvolumen bestimmt werden kann. Der vom Hochdruckspeicher 21 aufgebrachte hydraulische Druck wird von einem Drucksensor 35 überwacht.

Wie weiterhin der Zeichnung zu entnehmen ist, sind die Radbremsen 7, 8 an den ersten Druckraum 14 mittels einer Leitung 5 angeschlossen, in der ein Trennventil 11 eingefügt ist, das als stromlos offenes (SO-) 2/2-Wegeventil ausgeführt ist und ein Absperren des ersten Druckraums 14 ermöglicht. Eine zweite hydraulische Leitung 34 verbindet die Druckseite der Pumpe 23 bzw. den Hochdruckspeicher 21 mit den Eingangsanschlüssen von zwei elektromagnetisch betätigbaren, analog regelbaren, vorzugsweise stromlos geschlossenen (SG-) 2/2-Wegeventilen bzw. Einlassventilen 17, 18, die den Radbremsen 7 und 8 vorgeschaltet sind. Ein weiteres Paar von ebenfalls elektromagnetisch betätigbaren, analog regelbaren, vorzugsweise stromlos geschlossenen (SG-) 2/2-Wegeventilen bzw. Auslassventilen 27, 28 ermöglicht eine Verbindung der Radbremse 7, 8 mit dem Druckmittelvorratsbehälter 4, während ein elektromagnetisch betätigbares, vorzugsweise stromlos offenes (SO-) Druckausgleichsventil 13 eine radindividuelle Regelung der in den Radbremsen 7, 8 eingesteuerten Drücke ermöglicht.

Außerdem sind den Radbremsen 7, 8 Drucksensoren 30, 31 zugeordnet, mit deren Hilfe der in den Radbremsen 7, 8 herrschende hydraulische Druck ermittelt wird. Die vorhin erwähnte elektronische Regel- und Steuereinheit ECU 16, der die Ausgangssignale der Drucksensoren 19, 30, 31, 35, der Raddrehzahlsensoren 24, 25, sowie einer vorzugsweise redundant ausgeführten Bremswunscherfassungseinrichtung 33 zugeführt werden, die dem Hauptbremszylinder 2 zugeordnet ist, dient der Ansteuerung des Motor-Pumpen-Aggregats 20 sowie der vorhin erwähnten Ventile 11, 13, 17, 18, 27, 28.

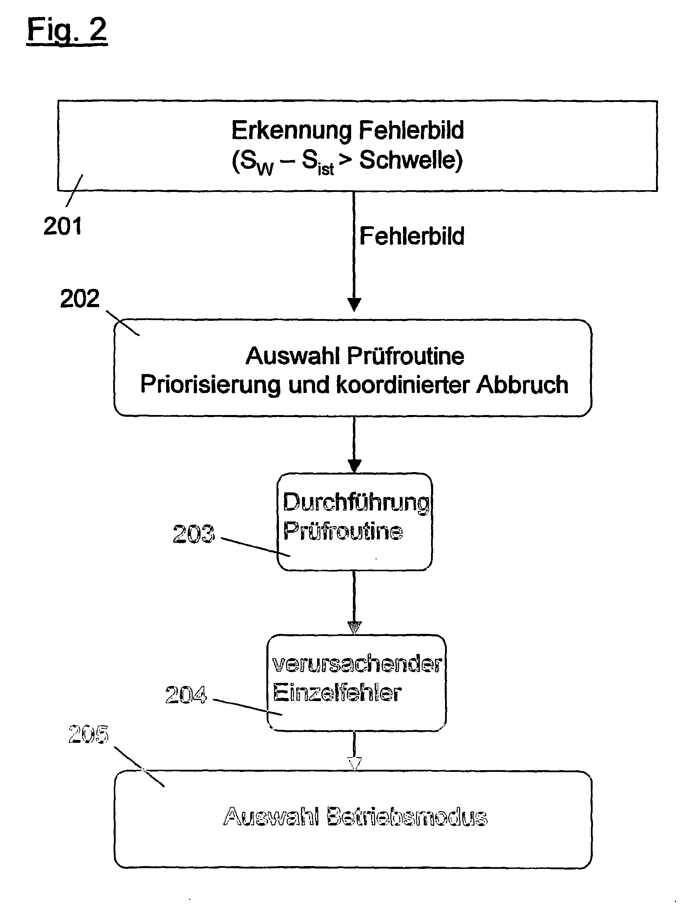

Im Folgenden wird das vorbekannte Verfahren anhand des in Fig. 2 dargestellten schematischen Ablaufplans näher erläutert. Das Verfahren kann sowohl bei einem anhand von Fig. 1 beschriebenen elektrohydraulischen Bremssystem vom Typ "Brake-by-wire" als auch bei einem herkömmlichen elektrohydraulischen Bremssystem durchgeführt werden.

Das vorbekannte Verfahren sieht vor, dass zunächst ein Fehlerbild in der anhand von Fig. 1 erwähnten elektronischen Steuer- und Regeleinheit erkannt wird (Verfahrensschritt 201). Dazu werden fortlaufend während des Betriebs des Bremssystems alle hydraulischen und elektrischen Sollwerte mit den gemessenen Istwerten verglichen, indem die Differenz der beiden Werte gebildet wird. Falls der Betrag der Differenz größer als eine vorher festgelegte Schwelle ist, handelt es sich um ein Fehlerbild. Man spricht vor allem deshalb von einem Fehlerbild, da die eben erwähnte Sollwertabweichung der gemessenen Istwerte unterschiedliche Fehlerursachen, die sogen. verursachenden Einzelfehler, haben kann. Man erhält durch die Sollwertabweichung also ein bestimmtes Fehlerbild, das seinen Ursprung in verschiedenen Einzelfehlern haben kann. Den das Fehlerbild verursachenden Einzelfehler zu lokalisieren, um einen Betriebsmodus für das Bremssystem zu wählen, der den verursachenden Einzelfehler berücksichtigt, ist das Ziel des erfindungsgemäßen Verfahrens.

Nachdem im Verfahrensschritt 201 des in Fig. 2 dargestellten Ablaufplans ein Fehlerbild erkannt ist, wird dem Fehlerbild eine Priorität zugeordnet, die der Relevanz des Fehlerbildes hinsichtlich der Betriebssicherheit der Bremsanlage entspricht (Verfahrensschritt 202). Anschließend wird eine dem Fehlerbild entsprechende Prüfroutine ausgewählt und im Verfahrensschritt 203 durchgeführt. Dabei werden die hydraulischen Komponenten, die gemäß dem Fehlerbild fehlerhaft sein könnten, auf ihre Funktionsfähigkeit hin überprüft. Außerdem werden vorhandene Regelstrategien abgeändert um die hydraulischen Komponenten ebenfalls hinsichtlich ihrer Funktionsfähigkeit zu überprüfen. Es ist dabei vorgesehen, dass die Prüfroutine und die Abänderung der Regelstrategien vom Fahrzeugführer unbemerkt ablaufen und die bestmögliche Bremsleistung aufrecht erhalten wird. Deshalb wird beispielsweise die Prüfroutine vorzugsweise durchgeführt, wenn sich das Kraftfahrzeug in einem Zustand befindet, in dem die Auswirkungen der Durchführung keine gefährlichen Fahrsituationen herbeiführen kann, also zum Beispiel während einer Stillstandsphase des Kraftfahrzeuges. Mit Hilfe der Prüfroutine und der Abänderung der vorhandenen Regelstrategien wird der das Fehlerbild verursachende Einzelfehler 204 lokalisiert und ein Betriebsmodus für das Bremssystem gewählt, der den verursachenden Einzelfehler berücksichtigt (Verfahrensschritt 205).

Nach einer erfolgreichen Lokalisierung des verursachenden Einzelfehlers und dem Betrieb des Bremssystems in einem Betriebsmodus, der den verursachenden Einzelfehler berücksichtigt, kann das erfindungsgemäße Verfahren erneut durchgeführt werden, wenn erneut ein Fehlerbild erkannt wird. Man spricht in diesem Zusammenhang davon, dass das erfindungsgemäße Verfahren mehrfachfehlertauglich ist.

Schlägt die Lokalisierung des verursachenden Einzelfehlers fehl, so wird das Bremssystem in einem Betriebsmodus betrieben, der eine begrenzte Menge zu dem erkannten Fehlerbild passenden Einzelfehler berücksichtigt. Die Lokalisierung des verursachenden Einzelfehlers wird nachgeholt, wenn eine geeignete Prüfsituation zur Verfügung steht.

Wie vorhin beschrieben, werden jedem im Verfahrensschritt 201 erkannten Fehlerbild unterschiedliche Prioritäten zugeordnet, die der Relevanz des Fehlerbildes hinsichtlich der Betriebssicherheit der Bremsanlage entsprechen. Für den Fall, dass ein weiteres Fehlerbild mit einer höheren Priorität während der eben erwähnten Durchführung der Prüfroutine (Verfahrensschritt 203) erkannt wird, wird die gerade durchgeführte Prüfroutine koordiniert abgebrochen. Dieser koordiniere Abbruch wirkt sowohl auf die gerade durchgeführte Prüfroutine als auch auf die Abänderung der vorhandenen Regelstrategien ein und versetzt das Bremssystem in denselben Zustand wie vor Beginn der Prüfroutine, die koordiniert abgebrochen werden soll. Man spricht in diesem Zusammenhang auch von einer Master-Slave-Struktur, da die verschiedenen Prüfroutinen (Slaves) von einer übergeordneten Einheit (Master) verwaltet und koordiniert werden.

Ein koordinierter Abbruch der gerade durchgeführten Prüfroutine ist ebenfalls bei einer Interaktion des Fahrzeugführers vorgesehen. Zum Beispiel muss die Prüfroutine koordiniert abgebrochen werden, wenn sie während einer Stillstandsphase des Kraftfahrzeugs durchgeführt wird und der Fahrzeugführer sein Kraftfahrzeug wieder ungebremst bewegen möchte.

Zur Konkretisierung des vorbekannten Verfahrens wird im Folgenden das eben beschriebene Verfahren anhand eines konkreten Fehlerbildes beschrieben und dabei auf Fig. 1 Bezug genommen. Wenn die als (SG-) 2/2-Wegeventilen ausgebildeten Einlassventile 17, 18 der Radbremsen 7, 8 nicht betätigt werden, das heißt, nicht geöffnet werden, so darf das Druckmittelvolumen im Hochdruckspeicher 21 nicht geringer werden. Der bereits beschriebene, in Fig. 1 nicht dargestellte Wegsensor ermittelt die Position des metallischen Faltenbalgs im Hochdruckspeicher 21 und damit auch das dort gespeicherte Druckmittelvolumen. Der Wegsensor liefert einen Istwert, der in der elektronischen Steuer- und Regeleinheit 16 mit dem zugehörigen Sollwert verglichen wird. Ist dabei die Differenz der beiden Werte größer als eine vorher festegelegte Schwelle, wird ein Fehlerbild hinsichtlich der unplausiblen Entleerung des Hochdruckspeichers 21 erkannt. Der mögliche verursachende Einzelfehler für die unplausible Entleerung des Hochdruckspeichers 21 ist eine Leckage der Einlassventile 17 ,18, eine Leckage der hydraulischen Leitung 34 oder des Hochdruckspeichers 21 oder ein Defekt des eben erwähnten Wegsensors. Außerdem kann der verursachende Einzelfehler auch darin bestehen, dass eine innere Leckage der Pumpe 23 vorliegt.

Im folgenden Verfahrensschritt wird eine für das Fehlerbild "unplausible Entleerung des Hochdruckspeichers 21" geeignete Prüfroutine ausgewählt. Diese Prüfroutine wird gestartet, wenn kein Druckaufbau in den Radbremsen 7, 8 angefordert wird. Anschließend werden sowohl das Trennventil 11 als auch das Druckausgleichsventil 13 geschlossen und die Signale der Drucksensoren 30, 31 überwacht. Die Einlass- und Auslassventile 17, 18, 27, 28 der Radbremsen 7, 8 werden ebenfalls geschlossen. Wenn der das beschriebene Fehlerbild verursachende Einzelfehler ein nicht mehr schließendes Einlassventil 17 der Radbremse 7 ist, so wird der Drucksensor 30 ein Signal mit einem Druckistwert abgeben, der vom erwarteten Sollwert von 0 bar abweicht. Die unplausible Speicherentleerung wird also von dem nicht mehr funktionstüchtigen Einlassventil 17 verursacht. Ein Betriebsmodus, der diesen verursachenden Einzelfehler berücksichtigt, sieht vor, dass das Druckmittel im Hochdruckspeicher 21 abgelassen wird und der Druckaufbau in den Radbremsen 7, 8 ausschließlich durch die Pumpe 23 erfolgt. In diesem Betriebsmodus ist es unerheblich, dass das Einlassventil 17 defekt ist.

Für den Fall, dass kein vom erwarteten Drucksollwert von 0 bar abweichender Druckistwert gemessen wird, muss das Fehlerbild auf einem anderen verursachenden Einzelfehler beruhen. Die Prüfroutine sieht nun vor, dass das Speichervolumen an Druckmittel im Hochdruckspeicher 21 nahe einer vorgegebenen oberen Schwelle gehalten werden soll. Falls der verursachende Einzelfehler eine relativ große Leckage der hydraulischen Leitung 34 oder des Hochdruckspeichers 21 ist, so wird die Pumpe 23 nicht in der Lage sein, den Hochdruckspeicher 21 wieder zu füllen, was vom Wegsensor im Hochdruckspeicher 21 sensiert wird. Die Pumpenüberwachung meldet in diesem Fall, dass der Hochdruckspeicher 21 nicht geladen wird, obwohl die Pumpe 21 maximal Druckmittel in den Hochdruckspeicher 21 fördert. Diese Meldung der Pumpenüberwachung lässt auf eine starke Leckage der hydraulischen Leitung 34 oder des Hochdruckspeichers 21 schließen. Der Betriebsmodus, der diesen verursachenden Einzelfehler berücksichtigt, ist die bekannte hydraulische Rückfallebene bei der der Druckaufbau in den Radbremsen 7, 8 ausschließlich durch die Verschiebung der Kolben 9, 10 im Hauptbremszylinder 2 erfolgt. Falls es sich nicht um eine große Leckage der hydraulischen Leitung 34 oder des Hochdruckspeichers 21 handelt, wird die Pumpe 23 den Hochdruckspeicher 21 bis zu der vorgegebenen oberen Schwelle laden. Ist die Pumpe für eine bestimmte Zeitspanne von vorzugsweise 150 sec in der Lage, das Druckmittelvolumen im Hochdruckspeicher 21 über der eben erwähnten oberen Schwelle zu halten, so ist der verursachende Einzelfehler eine geringe Leckage der hydraulischen Leitung 34 oder eine innere Leckage des Motorpumpenaggregats 20. Welcher Defekt genau der verursachende Einzelfehler ist, kann erst entschieden werden, wenn eine Warnmeldung über zu geringes Druckmittelvolumen im Druckmittelvorratsbehälter 4 auftritt. Dann handelt es sich um eine geringe Leckage der hydraulischen Leitung 34, da hierbei das Druckmittel in die Umgebung verloren wird, während bei einer inneren Leckage der Pumpe 23 das Druckmittel zurück in den Druckmittelvorratsbehälter 4 gelangt. Der Betriebsmodus, der einen sicheren Betrieb des Bremssystems gewährleistet berücksichtigt in diesem Fall beide möglichen Einzelfehler und ist wiederum die hydraulische Rückfallebene.

Ein weiteres Fehlerbild, das im Verfahrensschritt 201 des erfindungsgemäßen Verfahren erkannt wird, ist durch die Differenz eines von einem der Drucksensoren 19, 30, 31, 35 gemessenen Druckistwerts pᵢₛₜ und einem vorgegebenen Drucksollwert pₛₒₗₗ in mindestens einer der Radbremsen 7, 8, -, - gebildet. Ist der Betrag der Differenz größer als eine vorgegebene Schwelle, so wird das erfindungsgemäße Verfahren gestartet, wie es bereits beschrieben wurde. Die möglichen, verursachenden Einzelfehler und die dazugehörige Prüfroutine ergeben sich dabei entsprechend aus dem eben beschriebenen Fehlerbild.

Falls die Volumenaufnahme an Druckmittel in einer Radbremse 7, 8, die durch den bereits erwähnten Wegsensor im Hochdruckspeicher 21 ermittelbar ist, größer ist als die Volumenaufnahme, die durch die konstruktive Auslegung der Radbremse 7, 8 möglich ist, so stellt dies wiederum ein Fehlerbild dar, dessen verursachender Einzelfehler mit Hilfe des erfindungsgemäßen Verfahrens lokalisiert wird, um das Bremssystem in einem Betriebsmodus zu betreiben, das den verursachenden Einzelfehler berücksichtigt.

Für den Fall, dass der durch den Drucksensor 30 gemessene Druckistwert pᵢₛₜ in der Radbremse 7 oder der durch den Drucksensor 31 gemessene Druckistwert pᵢₛₜ in der Radbremse 8 ansteigt, obwohl kein Fahrerbremswunsch von der Bremswunscherfassungseinrichtung 33 erfasst wird, so liegt ebenfalls ein Fehlerbild vor, dessen verursachender Einzelfehler mit Hilfe des bereits beschriebenen Verfahrens lokalisiert wird.

Bei einer Abweichung der gemessenen Förderlast des MotorPumpenaggregats 20 gegenüber der vorgegebenen Förderlast oder bei einer unzureichenden Förderleistung des hydraulischen Motor-Pumpenaggregats 20 wird ebenfalls ein Fehlerbild erkannt und der verursachende Einzelfehler durch das erfindungsgemäße Verfahren mit Hilfe einer geeigneten Prüfroutine lokalisiert.

Der Druck im Hauptbremszylinder 2, der vom Drucksensor 19 gemessen wird, hängt vom Verfahrweg des Kolbens 9 ab. Da der eben erwähnte Kolben 9 vom Bremspedal 1, dessen Bewegung von der Bremswunscherfassungseinrichtung 33 erfasst wird, verschoben wird, stellt eine Abweichung des Druckistwerts im Hauptbremszylinder 2 gegenüber dem aufgrund des gemessenen Verfahrwegs des Kolbens 9 erwarteten Drucksollwert ein Fehlerbild dar. Der dieses Fehlerbild verursachende Einzelfehler wird durch das beschriebene Verfahren lokalisiert und das Bremssystem in einem Betriebsmodus betrieben, das den verursachenden Einzelfehler berücksichtigt.

## Patentansprüche

1. Verfahren zur Bestimmung von hydraulischen Fehlern in elektrohydraulischen Bremssystemen für Kraftfahrzeuge mit einer elektronischen Steuer- und Regeleinheit (16), mit Einlass- (17, 18) und Auslassventilen (27 ,28) versehenen Radbremsen (7, 8) und mindestens einer Druckquelle, mit den folgenden Verfahrensschritten:
• Erkennung eines Fehlerbildes durch Vergleich mehrerer, hydraulischer und elektrischer Sollwerte mit den durch Sensoren gemessenen Istwerten in der elektronischen Steuer- und Regeleinheit (16);
• Auswahl einer dem Fehlerbild entsprechenden Prüfroutine und deren Durchführung;
• Lokalisierung des das Fehlerbild verursachenden Einzelfehlers;
• Auswahl eines den verursachenden Einzelfehler berücksichtigenden Betriebsmodus und Betrieb des Bremssystems in diesem Betriebsmodus,
• **dadurch gekennzeichnet, dass** nach einer fehlgeschlagenen Lokalisierung des verursachenden Einzelfehlers eine begrenzte Menge an Einzelfehlern von einem Betriebsmodus berücksichtigt wird, bis eine geeignete Prüfsituation zur Lokalisierung des verursachenden Einzelfehlers zur Verfügung steht.

2. Verfahren nach Anspruch 1, **dadurch gekennzeichnet, dass** den Fehlerbildern unterschiedliche Prioritäten zugeordnet werden und dass ein koordinierter Abbruch der gerade durchgeführten Prüfroutine vorgesehen ist, wenn ein Fehlerbild mit einer höheren Priorität auftritt.

3. Verfahren nach Anspruch 1 oder 2, **dadurch gekennzeichnet, dass** ein koordinierter Abbruch der gerade durchgeführten Prüfroutine bei einer Interaktion des Fahrzeugführers vorgesehen ist.

4. Verfahren nach Anspruch 2 und 3, **dadurch gekennzeichnet, dass** der koordinierte Abbruch durchgeführt wird, indem das Bremssystem in denselben Zustand wie vor Beginn der abzubrechenden Prüfroutine versetzt wird.

5. Verfahren nach einem der Ansprüche 1 bis 4, **dadurch gekennzeichnet, dass** die Prüfroutine die einem Fehlerbild zugeordneten hydraulischen Komponenten hinsichtlich ihrer Funktionsfähigkeit überprüft oder Regelstrategien abändert, um den verursachenden Einzelfehler zu finden.

6. Verfahren nach Anspruch 5, **dadurch gekennzeichnet, dass** die Prüfroutinen unbemerkt vom Fahrzeugführer ablaufen und die bestmögliche Bremsleistung aufrecht erhalten oder alternativ dann durchgeführt werden, wenn sich das Kraftfahrzeug in einem Zustand befindet, in dem die Auswirkungen der durchgeführten Prüfroutinen keine gefährliche Fahrsituation herbeiführen.

7. Verfahren nach Anspruch 1, **dadurch gekennzeichnet, dass** nach der erfolgreichen Lokalisierung des verursachenden Einzelfehlers weitere, neu erkannte Fehlerbilder bearbeitet werden.

8. Verfahren nach einem der vorhergehenden Ansprüche, **dadurch gekennzeichnet, dass** das Fehlerbild durch einen von einem Drucksensor (19, 30, 31, 35) gemessenen Druckistwert (pᵢₛₜ) gebildet ist, der in mindestens einer Radbremse (7, 8) von einem vorgegeben Drucksollwert (pₛₒₗₗ) abweicht.

9. Verfahren nach einem der Ansprüche 1 bis 8, **dadurch gekennzeichnet, dass** das Fehlerbild durch eine Volumenaufnahme in mindestens einer Radbremse (7, 8) gebildet ist, die größer ist als die Volumenaufnahme, die durch die konstruktive Auslegung der Radbremse (7, 8) vorgegeben ist.

10. Verfahren nach einem der Ansprüche 1 bis 8, **dadurch gekennzeichnet, dass** das Fehlerbild durch einen ansteigenden Druckwert in mindestens einer Radbremse (7, 8) bei Abwesenheit eines Fahrerbremswunsches gebildet ist.

11. Verfahren nach einem der Ansprüche 1 bis 8, **dadurch gekennzeichnet, dass** die Druckquelle durch einen Hochdruckspeicher (21) gebildet ist und dass das Fehlerbild durch ein sinkendes Volumen im Hochdruckspeicher (21) bei gleichzeitig geschlossenen Einlassventilen (17, 18) gebildet ist.

12. Verfahren nach einem der Ansprüche 1 bis 8, **dadurch gekennzeichnet, dass** die Druckquelle durch ein hydraulisches Motorpumpenaggregat (20) gebildet ist und dass das Fehlerbild durch eine Abweichung der gemessenen Förderlast gegenüber der vorgegeben Förderlast oder durch eine unzureichende Förderleistung des hydraulischen Motorpumpenaggregats (20)gebildet ist.

13. Verfahren nach einem der Ansprüche 1 bis 8, **dadurch gekennzeichnet, dass** die Druckquelle durch einen Hauptbremszylinder (2) mit mindestens einem Kolben (9, 10) gebildet ist und dass das Fehlerbild durch eine Abweichung des im Hauptbremszylinder ermittelten Druckistwerts gegenüber dem aufgrund des gemessenen Verfahrwegs des Kolbens (9) erwarteten Drucksollwert gebildet ist.

## Claims

1. Method for the determination of hydraulic faults in electrohydraulic brake systems for motor vehicles, having an electronic control and regulation unit (16), having wheel brakes (7, 8) provided with inlet valves (17, 18) and outlet valves (27, 28), and having at least one pressure source, having the following method steps:
• detection of a fault pattern by the comparison of several hydraulic and electrical desired values with the actual values measured by sensors, in the electronic control and regulation unit (16);
• selection of a test routine corresponding to the fault pattern and execution of the said test routine;
• location of the individual fault causing the fault pattern;
• selection of an operating mode taking into account the individual fault which is the cause, and operation of the brake system in this operating mode,
• **characterized in that**, after a failed location of the individual fault which is the cause, a limited quantity of individual faults is taken into account by an operating mode, until a suitable test situation for locating the individual fault which is the cause is available.

2. Method according to Claim 1, **characterized in that** different priorities are assigned to the fault patterns, and **in that** a coordinated discontinuation of the test routine just executed is provided when a fault pattern with higher priority occurs.

3. Method according to Claim 1 or 2, **characterized in that** a coordinated discontinuation of the test routine just executed is provided in the event of interaction with the vehicle driver.

4. Method according to Claims 2 and 3, **characterized in that** the coordinated discontinuation is executed **in that** the brake system is put into the same state as before the commencement of the test routine to be discontinued.

5. Method according to one of Claims 1 to 4, **characterized in that** the test routine checks the hydraulic components assigned to a fault pattern in terms of their functioning capacity or modifies regulation strategies, in order to find the individual fault which is the cause.

6. Method according to Claim 5, **characterized in that** the test routines proceed unnoticed by the vehicle driver, and the best possible brake power is maintained, or, alternatively, the said test routines are executed when the motor vehicle is in a state in which the effects of the test routines executed do not give rise to a hazardous driving situation.

7. Method according to Claim 1, **characterized in that**, after the successful location of the individual fault which is the cause, further, newly detected fault patterns are processed.

8. Method according to one of the preceding claims, **characterized in that** the fault pattern is formed by a pressure actual value (p_{act}) which is measured by a pressure sensor (19, 30, 31, 35) and which deviates from a predetermined pressure desired value (p_{des}) in at least one wheel brake (7, 8).

9. Method according to one of Claims 1 to 8, **characterized in that** the fault pattern is formed by a volume uptake in at least one wheel brake (7, 8) which is greater than the volume uptake predetermined by the design of the wheel brake (7, 8).

10. Method according to one of Claims 1 to 8, **characterized in that** the fault pattern is formed by a rising pressure value in at least one wheel brake (7, 8) in the absence of a driver's braking wish.

11. Method according to one of Claims 1 to 8, **characterized in that** the pressure source is formed by a high-pressure accumulator (21), and **in that** the fault pattern is formed by a falling volume in the high-pressure accumulator (21) when the inlet valves (17, 18) are at the same time closed.

12. Method according to one of Claims 1 to 8, **characterized in that** the pressure source is formed by a hydraulic motor/pump assembly (20), and **in that** the fault pattern is formed by a deviation of the measured delivery load from the predetermined delivery load or by an insufficient delivery capacity of the hydraulic motor/pump assembly (20).

13. Method according to one of Claims 1 to 8, **characterized in that** the pressure source is formed by a brake master cylinder (2) with at least one piston (9, 10), and **in that** the fault pattern is formed by a deviation of the pressure actual value ascertained in the brake master cylinder from the pressure desired value expected on the basis of the measured travel of the piston (9).

## Revendications

1. Procédé de détermination des défauts hydrauliques dans des systèmes électrohydrauliques de freinage de véhicules automobiles qui présentent
une unité électronique de commande et de régulation (16),
des freins de roue (7, 8) dotés de soupapes d'admission (17, 18) et d'évacuation (27, 28) et d'au moins une source de pression,
le procédé présentant les étapes suivantes :
- détection dans l'unité électronique de commande et de régulation (16) d'une image de défaut par comparaison de plusieurs valeurs de consigne hydrauliques et électriques à des valeurs effectives mesurées par des détecteurs,
- sélection d'une routine de vérification qui correspond à l'image de défaut et exécution de cette routine,
- localisation du défaut particulier qui provoque l'image de défaut,
- sélection d'un mode de fonctionnement qui tient compte du défaut particulier en cause et utilisation du système de freinage dans ce mode de fonctionnement, **caractérisé en ce que**
après une localisation erronée du défaut particulier en cause, une quantité limitée de défauts particuliers est prise en compte dans un mode de fonctionnement jusqu'à ce qu'une situation de vérification appropriée permette de localiser le défaut particulier en cause.

2. Procédé selon la revendication 1, **caractérisé en ce que** différentes priorités sont associées aux images de défaut et **en ce qu'**une interruption coordonnée de la routine de vérification en cours d'exécution est prévue si une image de défaut de priorité plus élevée survient.

3. Procédé selon les revendications 1 ou 2, **caractérisé en ce qu'**une interruption coordonnée de la routine de vérification en cours d'exécution est prévue en cas d'interaction avec le conducteur du véhicule.

4. Procédé selon les revendications 2 et 3, **caractérisé en ce que** l'interruption coordonnée est exécutée en plaçant le système de freinage dans le même état qu'avant le début de la routine de vérification qui a été interrompue.

5. Procédé selon l'une des revendications 1 à 4, **caractérisé en ce que** pour découvrir le défaut particulier en cause, la routine de vérification vérifie le bon fonctionnement des composants hydrauliques associés à l'image de défaut ou modifie des stratégies de régulation.

6. Procédé selon la revendication 5, **caractérisé en ce que** les routines de vérification se déroulent sans que le conducteur du véhicule en soit averti et **en ce que** la meilleur capacité de freinage possible est maintenue ou en variante n'exécutée que si le véhicule automobile se trouve dans une situation dans laquelle les effets de l'exécution des routines de vérification n'amènent pas une situation de conduite dangereuse.

7. Procédé selon la revendication 1, **caractérisé en ce qu'**après la réussite de la localisation du défaut particulier en cause, d'autres images de défaut détectées sont traitées.

8. Procédé selon l'une des revendications précédentes, **caractérisé en ce que** l'image de défaut est formée par une valeur effective de pression (pᵢₛₜ) mesurée par un détecteur de pression (19, 30, 31, 35) et qui s'écarte sur au moins un frein de roue (7, 8) d'une valeur prédéterminée de pression de consigne (pₛₒₗₗ).

9. Procédé selon l'une des revendications 1 à 8, **caractérisé en ce que** l'image de défaut est formée par la reprise dans au moins un frein de roue (7, 8) d'un volume plus grand que le volume de reprise prédéterminé par la conception structurelle du frein de roue (7, 8).

10. Procédé selon l'une des revendications 1 à 8, **caractérisé en ce que** l'image de défaut est formée par l'augmentation d'une valeur de pression dans au moins un frein de roue (7, 8) en l'absence d'un souhait de freinage par le conducteur.

11. Procédé selon l'une des revendications 1 à 8, **caractérisé en ce que** la source de pression est formée par un réservoir (21) à haute pression et **en ce que** l'image de défaut est formée par une diminution du volume présent dans le réservoir (21) à haute pression alors que les soupapes d'admission (17, 18) sont fermées.

12. Procédé selon l'une des revendications 1 à 8, **caractérisé en ce que** la source de pression est formée par un ensemble (20) de pompe hydraulique à moteur et **en ce que** l'image de défaut est formée par un écart entre la charge de transport mesurée par rapport à la charge de transport prédéterminée ou par une capacité insuffisante de transport de l'ensemble (20) de pompe hydraulique à moteur.

13. Procédé selon l'une des revendications 1 à 8, **caractérisé en ce que** la source de pression est formée par un cylindre principal de frein (2) doté d'au moins un piston (9, 10) et **en ce que** l'image de défaut est formée par un écart entre la valeur effective de pression déterminée dans le cylindre principal de frein par rapport à la valeur de consigne de pression attendue compte tenu de la course mesurée du piston (9).
